# EUROPEAN PATENT SPECIFICATION

(11) **EP 4 478 576 B1**
(45) Date of publication and mention of the grant of the patent: **18.02.2026**
(21) Application number: 23179479.3
(22) Date of filing: 15.06.2023
(51) Int. Cl.: H02J 7/00, H04L 7/00, H04Q 9/00, H01M 10/42

(54) **COMMUNICATION DELAY MEASUREMENT IN A BMS COMMUNICATION CHAIN**
MESSUNG DER KOMMUNIKATIONSVERZÖGERUNG IN EINER BMS-KOMMUNIKATIONSKETTE
MESURE DE RETARD DE COMMUNICATION DANS UNE CHAÎNE DE COMMUNICATION BMS

(43) Date of publication of application: 18.12.2024
(73) Proprietor: NXP USA, Inc., Austin TX 78735 (US)
(72) Inventor: Ully, Klaus, 5656AG Eindhoven (NL)
(74) Representative: Hardingham, Christopher Mark

(56) References cited:
- WO-A1-2022/019984
- US-A1- 2016 173 295
- US-A1- 2023 098 055

## Description

### Field

The present disclosure relates to communication systems arranged in a daisy chain configuration, and in particular to battery management system, and to methods of operating the same.

### Background

Battery management systems, comprising a main controller also referred to as a battery management unit (BMU) or main node, and subsidiary controllers also referred to as battery cell controllers (BCC), are examples of communications systems which may be conveniently and usefully configured in a daisy chain arrangement. In a daisy chain arrangement, which may also be referred to as a communication chain, the main controller is in direct communication with only one of the subsidiary controllers. That subsidiary controller is in communication with the main controller and a neighbouring one of the subsidiary controllers, which in turn is in communication with a next subsidiary controller, and so on in a chain arrangement. In order for the main controller to communicate with all of the controllers, messages must be passed along the chain, each subsidiary controller receiving and then forwarding the message to its neighbour. Similarly, in order for a response to be received by the main controller from a remote one of the subsidiary controllers, the response must be transmitted to the remote controller's neighbour and forwarded back up the chain.

It will be immediately apparent, that in such a system, careful coordination is required in the case that all the subsidiary controllers are to perform an action simultaneously. In case the main controller transmits a message to perform the action to the subsidiary controllers, there will be a varying delay as the message is passed down the chain. If each subsidiary controller implements the action immediately on receiving the message, synchronicity will not occur. In order for the actions to be undertaken synchronously or simultaneously, the subsidiary controllers must wait until the most remote controller has received the message. It may thus be desirable to be able to determine the delay, and in particular the communication delay, between the main controller transmitting the message and any particular subsidiary controller receiving that message. This may be achieved by the main controller sending a message and requesting that each subsidiary controller provides a timestamp associated with the receipt of the message in order to calculate the respective delays; however, such methods typically require multiple messages and responses, to and from each subsidiary controller.

A battery management system is disclosed in document US 2023/098055 A1. Document US 2016/173295 A1 discloses a CAN bus, in which the delay time values between a pair of devices can be detected using a counter. Document WO 2022/019984 A1 discloses a daisy chain system.

### Summary

According to a first aspect of the present disclosure, there is provided a method of operating a battery management system, the battery management system comprising a communication chain comprising a battery management unit (BMU) and a plurality of battery cell controllers (BCC), a most-remote of the BCCs transmitting a message towards the BMU and starting a local-clock counter; each of a remainder of the BCCs receiving the message, and forwarding the message towards the BMU and starting a respective local-clock counter; the BMU receiving the message and starting a BMU-clock counter; the BMU transmitting a further message towards the most-remote of the BCCs, and stopping the BMU-clock counter to determine a BMU-interval-count; each of the remainder of the BCCs receiving the further message, forwarding the further message towards the most-remote of the BCCs, and stopping the respective local-clock counter to determine a respective local-interval-count; the most-remote of the BCCs receiving the further message, and stopping the most-remote-local-clock counter to determine its local-interval-count; the BMU transmitting the BMU-interval-count to each of the plurality of the BCCs; and each of the plurality of BCCs determining a respective communication delay from its respective local-interval-count and the BMU-interval-count. By starting the timed transmission from the most-remote BCC, a single pair of transmissions may be used to determine the delay for each of the BCCs, the complexity need not increase with an increased number of BCCs in the chain.

In one or more embodiments, the most-remote of the BCCs transmitting a message towards the BMU is in response to the BMU transmitting a preliminary message. This may be useful to ensure a timely operation of the method. Thus, although the disclosure is not limited to such embodiments, some embodiments of the present disclosure are directly compatible with initiator-responder schemes (also known as master-slave schemes), which are very common especially for simple communication protocols. The BMU is the communication initiator, the BCCs are communication responders. Only the BMU can initiate a communication with a request, and a BCC can respond to a request, if this is indicated in the request. This is also a simple scheme for communication systems that are half duplex, meaning that only one side can send at a time, otherwise a collision on the communication medium would occur. Thus, in an initiator-responder system, there is a central node which controls the communication and starts the delay measurement.

In one or more embodiments, the BMU-clock counter and the respective local-clock counter each operate at a same speed. In other embodiments, the clocks and clock-counters may run at different speeds. The skilled person will appreciate that in order to determine the delay in such other embodiments, the ratio of the clock-counters should be used to "normalise" the respective time-intervals.

In one or more embodiments, each of the plurality of BCCs determines a respective communication delay as half a difference between its respective local-interval-count and the BMU-interval-count. In such embodiments, the delay may be considered as a numerical clock-count (that is to say, the unit of time is a clock cycle). To determine the delay in microseconds, it must be divided by the clock-speed.

In one or more embodiments, starting the respective local-clock counters occurs at the commencement of the respective forwarding of the message, and stopping the respective local-clock counter occurs at the commencement of the respective forwarding of the further message. In one or more other embodiments, starting the respective local-clock counters occurs at the end of the respective forwarding of the message, and stopping the respective local-clock counter occurs at the end of the respective forwarding of the further message. Commencement of the forwarding of the message, and in particular a "start of message" symbol or indicator, may be easy to identify. Similarly the end of the message may be easy to identify. In still other embodiments a different reference point associated with message may be chosen to trigger the clock counter. This may be dependent on the communication protocol of the specific application or implementation. In particular, the skilled person will appreciate that if the End-Of-Message (EOM) is be used, then it would be possible to initiate the delay measurement by the most-remote BCC and the BCCs on the chain could receive and switch to delay measurement mode immediately - although in general this would only be practicable in application in which the communication system is not a initiator - responder scheme.

In one or more embodiments, the method further comprises synchronising an action of the plurality of BCCs. Determination of a communication delay to each of the BCCs may thus enable synchronisation or simultaneously of action of the BCCs under command from the BMU.

In one or more such embodiments, synchronising an action of the plurality of BCCs comprises each of the BCCs receiving a command, and implementing the command for after a delay equal to a default delay less its respective communication delay. In one or more such embodiments, the default delay is a maximum of the respective communication delays and the communication delay of the most-remote BCC. In other embodiments, the default delay may be selected to be larger than a maximum of the retrospective communication delays and the communication delay of the most remote BCC. In particular, in applications in which there are two or more chains in parallel, then the default delay may be the maximum one of the delays of each of the most-remote BCCs in all chains. In embodiments in which there are two or more chains in parallel, some of the chains may include a sub-controller between the BCCs and the BMU Alternatively and without limitation, each chain may have it's own BMU.

According to a second aspect of the present disclosure, there is provided a battery management system (BMS) comprising: a battery management unit (BMU); and a plurality of battery cell controllers (BCC), in a communication chain configuration with the BMU, and comprising a most-remote BCC; wherein the most-remote BCC is configured: to transmit a message towards the BMU and start a most-remote-clock counter; and to receive a second message, stop the most-remote-clock counter to determine its local-interval-measurement; wherein each of a remainder of the BCCs is configured: to receive the message, forward the message towards the BMU and start a respective local-clock counter; and to receive the second message, forward the second message towards the most-remote of the BCCs, and stop the respective local-clock counter to determine a respective local-interval-measurement; wherein the BMU is configured: to receive the message, and start a BMU-clock counter; to transmit a further message towards the most-remote of the BCCs, and stop the BMU-clock counter to determine a BMU-interval-measurement; and to transmit the BMU-interval-measurement to each of the plurality of BCCs; and wherein each of the plurality of BCCs is further configured to determine a respective communication delay as half a difference between its respective local-interval-measurement and the BMU-interval-measurement.

In one or more embodiments, the BMU-clock counter and the respective local-clock counter are each configured to operate at a same speed. In one or more such embodiments, the respective communication delay for each of the plurality of BCCs is half a difference between its respective local-interval-count and the BMU-interval-count.

In one or more embodiments, starting the respective local-clock counters occurs at the commencement of the respective forwarding of the message, and stopping the respective local-clock counter occurs at the commencement of the respective forwarding of the further message.

In one or more embodiments, the system is further configured to synchronising an action of the plurality of BCCs. In one or more such embodiments, each of the BCCs is configured to receive a command, and implement the command for after a delay equal to a default delay less its respective communication delay.

In one or more embodiments the default delay is a maximum of the respective communication delays and the communication delay of the most-remote BCC.

These and other aspects of the invention will be apparent from, and elucidated with reference to, the embodiments described hereinafter.

### Brief description of Drawings

Embodiments will be described, by way of example only, with reference to the drawings, in which:
FIG. 1 illustrates a battery management system, BMS, 100 to which the present disclosure may be applicable;
FIG. 2 shows, schematically, a method according to embodiments of the present disclosure;
FIG. 3 illustrates a BMS according to one or more embodiments including more detail of the main node and BCCs;
FIG. 4 shows flowcharts in accordance with one or more embodiments of the present disclosure; and
FIG. 5 shows, schematically, a method to ensure simultaneous operation of a plurality of BCCs using communication delays determine in accordance with embodiments of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

### Detailed description of embodiments

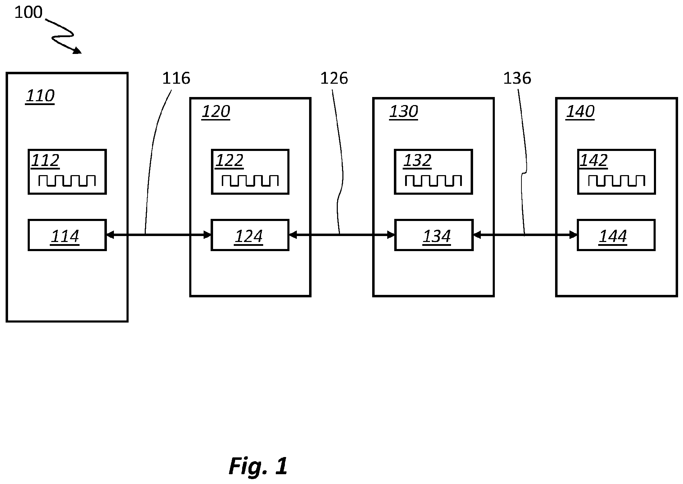

FIG. 1 illustrates a battery management system, BMS, 100 to which the present disclosure may be applicable. The BMS 100 comprises a battery management unit (BMU) 110, and a plurality of battery cell controllers (BCC). In the example shown, there are three battery cell controllers 120, 130 and 140, although it will be appreciated that in a practical system there may be many more controllers. The BMU and BCCs are arranged in a communication chain, which may also be referred to as a daisy chain, configuration. That is to say, BMU 110 is in direct communication only with a nearest BCC 120. The nearest BCC 120 is in communication with the BMU and with a neighbouring BCC, in this case BCC 130. The neighbouring BCC 130 is in communication with the nearest BCC 120 and with a further BCC, which in this case is BCC 140. In the example shown, in which there are three BCCs, the further BCC 140 is also a most remote BCC from the BMU 110. The BMU 110 includes a local clock 112. Each BCC includes its own local clock, 122, 132, 142 respectively for the BCCs shown. In the description hereinbelow it will be assumed that the clocks of the BMU and BCCs all run at the same speed, although the present disclosure is not limited thereto. In embodiments in which the clock speeds are different, delay and interval calculations can take this into account, typically by normalising clock-counts, for instance by dividing the counts by the clock speed. Furthermore, the BMU includes a transceiver 114. The transceiver 114 may be implemented as a separate transmitter and receiver. Moreover, each BCC includes its own transceiver, which in the example shown are transceivers 124, 134 and 144. The neighbouring BCCs share a communication link, which generally comprises one or more wires. As shown, there is a direct connection 126, or link, between the nearest BCC 120 and the neighbouring BCC 130, and a further direct connection 136 between the neighbouring BCC 130 and the further BCC1 140. Furthermore, shown is a direct link, which may typically be a wired link, between the BMU 110 and the first BCC 120.

As already mentioned, the BMU 110 is in direct communication only with the first BCC 120. In order for the BMU 110 to transmit a message to the neighbouring BCC, the message is first transmitted to the first BCC 120, and then onwards transmitted to the neighbouring BCC 130. Similarly, in order for the BMU 110 to transmit a message to the further BCC 140, it must be first transmitted to the first BCC 120, then retransmitted or forwarded to the neighbouring BCC 130 and then retransmitted or forwarded again to the further transmitter 140. Transmission of the message takes a finite amount of time, as, typically, does processing the message within any BCC along the chain before the message is retransmitted. A message from the BMU to all of the BCCs is therefore not received synchronously or simultaneously by the BCCs, but rather with a delay, which increases further along the chain. This is problematic in situations in which the BCCs are instructed to carry out an operation, or action, simultaneously. The problem may be solved by determining a transmission delay between each BCC and the BMU. The operation, or action, may then, for instance, be deferred by each BCC by a delay period which corresponds to its respective transmission delay.

The transmission delay for any BCC may be determined by the BMU by sending a message from the BMU, to the BCC, requesting an immediate response. The time interval between sending the message and receiving the response is the sum of the transmission delay in the message reaching the BCC, any processing time within the BCC, and the transmission interval in the response reaching the BMU. However, in general such a solution is not scalable, and becomes increasingly time-consuming as the number of BCCs increases, since typically a separate message and response is required for determination of the transmission interval for each BCC. It would be desirable to provide a method which is relatively independent of the number of BCCs.

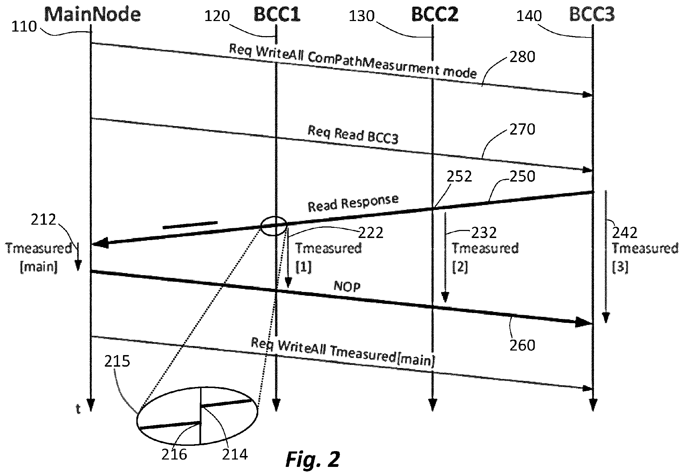

FIG. 2 shows, schematically, a method according to embodiments of the present disclosure. The figure shows a timing diagram for various communications between a main node 110, and a plurality of BCCs. In the example shown there are three BCCs: BCC1 120, BCC2 130 and BCC3 140. BCC3 140 is most remote from the BMU 110, which may also referred to as the main node. Instead of the timing measurements being initiated by a message from the BMU, the measurements are initiated from the most remote BCC 140. The communication delay between the most remote BCC 140 and the BMU 110 is determined from a round-trip time measurement starting from the most remote BCC 140. In order to do so, the most remote BCC 140 transmits, as shown at 250, a message towards the BMU, and starts a counter, using its local clock 142. The message from the most remote BCC 140 is not received directly by the BMU. Instead it is received by the neighbouring BCC, in this case neighbouring BCC 130, as shown at 252. The neighbouring BCC 130 receives the message and forwards it or retransmits it onwards towards the BMU. The neighbouring BCC 130 may also process the message, either prior to or in parallel with forwarding it,. This is repeated by each of the BCCs in the chain. In the example shown where there are only three BCCs, the message from the neighbouring BCC 130 is received by the BCC1 120 which receives it, may process it, and forwards it to the BMU 110. When each BCC in the chain forwards the message, that BCC starts the counter using its own local clock. In this case BCC2 130 starts a counter using its local clock 132 when it forwards message, and BCC 1 120 starts its own counter using its own clock 122 only when it forwards the message to the BMU 110. The skilled person will appreciate that, although in the main part of FIG. 2 the message 250 is shown as passing straight through the subsidiary controller 130, in practice it will be appreciated that there may be a short delay. This is illustrated in the detail called out at 215 in which the message is received by BCC 120 at a first time 214, processed, and then forwarded or retransmitted at a slightly later time 216.

When the BMU receives the message, it starts a counter using its local clock 112. Upon receipt of the message, the BMU then sends a further message 260 towards the most remote BCC 140. When it transmits this further message, the BMU stops a counter of its clock. The resulting BMU-interval-count, that is to say the value of the counter when it is stopped assuming it starts at zero, or more generally the difference between the start value and stop value, is thus indicative of a "turnaround time" that is to say the time between receiving the message from the most remote BCC, and sending the further message, at the BMU.

Sequentially along the chain, each of the BCCs receives the further message 260, stops its own local-clock counter, and - except for the most-remote BCC 140 - forwards the further message towards the most-remote of the BCCs. Each of the BCCs thus determines a respective local-interval-count.

Subsequently, the BMU transmits the BMU-interval-count to each of the plurality of the BCCs, as shown at 230. Since, for each of the plurality BCCs, the total time interval between starting its clock and stopping its clock corresponds to twice the communication delay (that is to say a first instance of the delay whilst the message is sent, and a second instance of the delay whilst the further message is sent) together with the turnaround time at the BMU, each of the plurality of BCCs is then able to determine a respective communication delay which corresponds to half the difference between its respective local-interval-count and the BMU-interval-count. It will be appreciated that the above analysis assumes that the data transmission has the same delay in both directions, and thus a direction-independent delay of "half the difference" is correct. Although that is not always exactly correct, over the complete chain any direction-dependent differences tend to average. Moreover, If the dependency between transmission delay and direction is known, a ratio other than "half" could also be used.

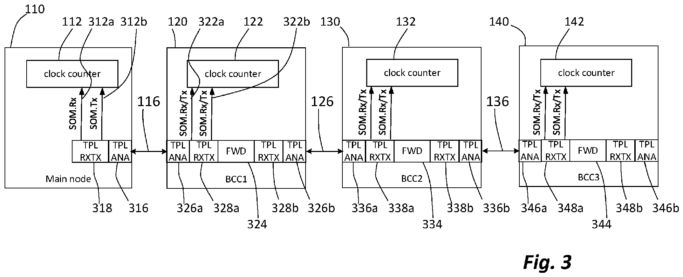

FIG. 3 illustrates a BMS according to one or more embodiments including more detail of the main node and BCCs. Each of the BMU 110, and the BCCs, which in the case illustrated are BCC1 120, BCC 2 130 and BCC 3 140 includes a clock or clock counter, 112, 122, 132 and 142 respectively. BMU 110 includes an analogue transceiver TPLANA 316, and a symbol decoder and encoder TPLTXRX 318. Each of the BCCs 120, 130 and 140 includes a pair of analogue transceivers (328a and 328b, 338a and 338b, and 348a and 348b respectively), each of which is connected to a neighbouring BCC through one of the links 126 and 136, or in the case of the BCC closest to the BMU, to the BMU by link 116. One or more of the transceivers may be implemented as separate receiver and transmitter. Each of the BCC's analogue transceivers is logically connected to an associated symbol decoder and encoder TPLTXRX, (326a and 326b, 336a and 336b, and 346a and 346b respectively). It will be appreciated that in any BCC, the same circuitry may be used for the pair of symbol decoders and encoders such as 326a and 326b. Furthermore, each BCC includes forwarding logic between the transceivers, shown as 324, 334 and 336 respectively for BCCs 120, 130 and 140. The forwarding logic is bidirectional in the sense that it forwards messages received its first transceiver to its second transceiver, and forwards messages received by its second transceiver to its first transceiver. So for example forwarding logic 324 forwards messages received by transceiver 326b to transceiver 328a and forwards messages received by transceiver 326a to transceiver 328b.

According to embodiments of the present disclosure, when a BCC for example BCC1 120 retransmits the message from its neighbour, in this example BCC2 130, to BMU 110, it starts the clock counter 122 according to its clock. This is illustrated by instruction 322a ""SOM.Tx". Furthermore, when the BCC receives the further message from the BMU, it stops the clock counter 112 according to its clock. This is illustrated by instruction 322b ""SOM.Rx" in the FIG. From the FIG. it is also apparent that the BCCs are "symmetric" that is to say transceiver 326a corresponds to transceiver 326b, transceiver 328a corresponds to transceiver 328b, and so on. Thus, for a different configuration of the chain (for instance if the main node 110 is on the right hand end of the chain, the SOM.Tx and SOM.Rx instructions 322a, 322b and so on, may come from the "other" respective transceiver, that is to say 336b, 338b, instead of 336a, 338a as shown.

The differrence (Tmeasured [1], shown at 222 in FIG. 2) between the start and stop values of the counter is indicative of the sum of the communication interval between the BCC 120 and the BMU 110, the time for the BMU to receive the message, process it and transmit the further message, and the communication interval between the BMU 110 and the BCC 120. Since the communication between the BMU 110 and the BCC 120 is generally the same as the communication interval between BCC 120 and the BMU 110, if the time for the BMU to receive message, process it and commence transmitting the further message can be determined, then it is possible to determine the communication interval. The time for the BMU to receive message, process it and transmit the further message may be determined by its clock counter 112. In particular, when it starts to receive the message the symbol decoder and encoder 318 initiates or starts the counter, shown by sending an instruction 312a ("SOM.Rx"). And when it starts to transmit the message, it stops the counter, as shown by the instruction 312b ("SOM.Tx"). The resulting interval ("Tmeasured [main]", shown at 212 in FIG. 2), is subtracted from Tmeasured [1], and the result halved to result in the communication interval between the BMU 110 and the BCC 120.

Since each of the BCCs (BCC1, BCC2, BCC3) starts its respective clock counter when it transmits or forwards the message, and stops its clock counter when it receives the further message, each can thereby determine a time interval Tmeasured [1] 222, Tmeasured [1] 232 and Tmeasured [1] 242, and by subtracting Tmeasured [main], and halving the result, can determine the communication interval between BMU 110 and itself (BCC1, BCC2, BCC3 respectively).

It will be appreciated that, irrespective of the number of BCCs in the chain, only one message and one further message is required to determine the communication interval for all of the BCCs.

Typically, only the BMU can initiate messages, to which one or more of the BCCs may respond, and in this case, a preliminary message may be required to be sent from the BMU to all of the BCCs. This is shown figuratively in FIG. 2 by the message 270 "req read BCC3", or "request a response from BCC3". Furthermore, an earlier message ("Req WriteAll ComPathMeasurement Mode") may be transmitted by the BMU as shown at 280 in FIG. 2. This is a request to inform all BCCs in the chain that a delay measurement will be started. This may be useful, since it enables the BCCs to know in advance that a delay measurement is about to begin, or that a delay mode should be entered; this will enable them to be ready to start their local clock counter at SOM.Tx, before they receive and process the whole response message from BCC3. Depending on the protocol used, it may be possible to combine this message with the message 270 "req read BCC3".

As mentioned above, each of the BCCs instructs its respective clock counter to start (or stop) when it transmits (or receives) the message (or further message). It will be appreciated that transmitting or receiving a message takes a finite amount of time. The instruction is therefore sent at a particular reference point of the message. As shown, a convenient reference point may be a "start-of-message" (SOM) symbol or indicator. Alternatively, the reference may be selected as an "end-of-message" (EOM) symbol or indicator. The skilled person will appreciate that the above-mentioned options are not exclusive, and other convenient reference points within or associated with the transmission of a message may be chosen and may depend on a particular communication protocol used. It will be recognised that the present disclosure is not limited to any specific communication protocol.

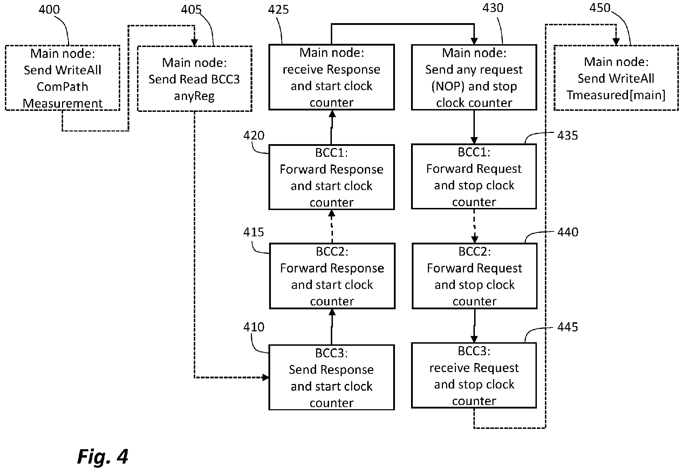

Considering now FIG. 4, this shows flowcharts in accordance with one or more embodiments of the present disclosure. According to a first aspect, the method commences at step 410 by a most remote BCC, in this case BCC 3 sending a message, which may also be referred to as a response, and starting its clock counter. At step 415 and immediately neighbouring BCC, in this case BCC 2 forwards the response and start its own clock counter. The message is sequentially forwarded by any intermediate BCCs (not shown) until, at step 420, the BCC closest to the BMU, which in this case is BCC 1 closest to the main node, forwards the response and start its own clock counter. At step 425, the main node, that is to say the BMU, receives the response and start its own clock counter. Once the BMU has received the response, it initiates another message, which in this case is a no operation (NOP) request. The skilled person will appreciate that it need not be a NOP message; rather, it could be any message, for instance a message that is not related to the measurement, since only the SOM, and not the message content, is used for the measurement. At step 430 it sends this request and stops its clock counter. At step 435, the immediately neighbouring BCC that is to say BCC1 in this example, forwards the request and stops its clock counter. The request is received and forwarded by any intermediate BCCs (not shown) until it reaches the last but one. At step 440, BCC 2 forwards the request and stops its clock counter. The request is received by the most remote BCC, in this case BCC 3 which, at step 445 receive the request and stops its own clock counter. With only these two timing messages, the communication delay between the BMU, that is to say the main node, and any BCC can be calculated.

In a further step 450, the BMU main node may send the value of Tmeasured [main] to all the BCCs. Furthermore, prior to the most remote BCC sending the message also referred to as the response, the BMU main node may send a corresponding request such as, as shown at 405 "send read BCC 3 anyReg". Yet further, this message from the main node may be preceded by another message, as shown at step 400, "WriteAllComPathMeasurment", discussed above with reference to message 280.

It will be appreciated, that as shown in FIG. 4, method steps taken by any individual module or unit, such as the BMU (main node) or BCC1, have been positioned in the same horizontal row in the figure. As a result the flowchart does not flow from the top of the figure to the bottom of the figure as is often the case with flow charts. Furthermore, in case of the optional steps such as 405 ("main node: send read BCC 3 any rag"), the message is not directly transferred to BCC , but as shown by the process flow line 407, it is communicated along the communication chain (that is to say in this instance through BCC1, BCC2, and thence to BCC3).

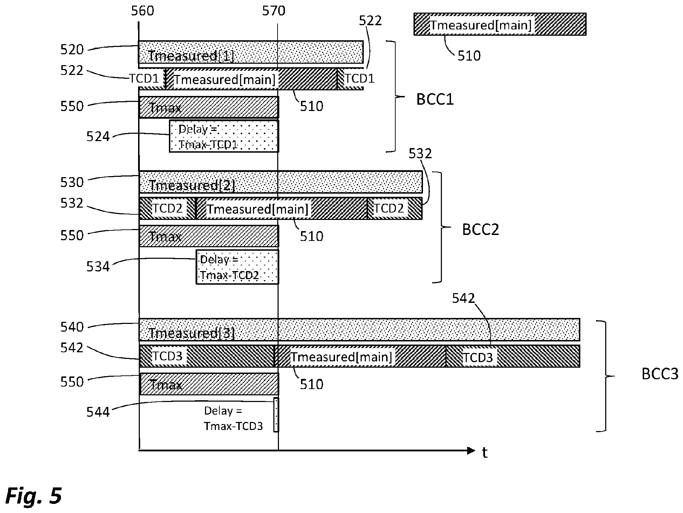

FIG. 5 shows, schematically, a method to ensure simultaneous operation of a plurality of BCCs (in this instance three, BCC1, BCC 2 and BCC 3) using communication delays determine in accordance with embodiments of the present disclosure. The passage of time is indicated along the horizontal access, and values associated with BCC1 are shown on top of the figure, BCC2 in the middle section and BCC3 in the bottom section. The "turnaround time" Tmeasured [main] of the BMU, calculated as described above, is shown separately at 510, and the interval-count of each of the BCCs, respectively Tmeasured[1], Tmeasured[2] and Tmeasured[3] are shown at 520, 530, and 540. By subtracting Tmeasured [main] and halving the results, the communication delay for each of the BCCs is calculated, as depicted by TCD1, TCD2, and TCD3 at 522, 532, and 542 respectively. A time Tmax 550 is then chosen, preferably, such that Tmax is greater or equal to the maximum of TCD1, TCD2, and TCD3. In the present instance, since BCC3 is the most remote BCC, TCD3 is the greatest of these, and the time Tmax 550 is selected to be greater than TCD3.

An instruction may then be sent from the BMU, at a moment in time 560. For operation at a moment in the future which is defined by Tmax. The instruction is received in turn by each of BCC 1, BCC 2 and BCC 3, at the end of their respective communication delays TCD1 522, TCD2 532 and TCD3 542. On receipt of the instruction, BCC1 delays execution of the instruction by a time delay shown at 524 as being equal to Tmax minus TCD1. Similarly, on its receipt of the instruction, BCC2 delays execution of the instruction by a time delay shown at 524 as being equal to Tmax minus TCD2, and on its receipt of the instruction, BCC3 delays execution of the instruction by a time delay shown at 524 as being equal to Tmax minus TCD3, and. As can be seen from the figure, execution of the instruction by each of the BCCs then occurs simultaneously at the moment in time shown at 570.

As shown in FIG. 5, each BCC may defer or delay implementing a command, by a respective calculated delay, in order to synchronise their respective actions. Alternatively, and without limitation, the calculated communication delay TComDelay for each BCC may be used to mathematically correct measurement results of an action (for instance by correcting the phase of a measured signal by the delay).

From reading the present disclosure, other variations and modifications will be apparent to the skilled person.

It is noted that one or more embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Features which are described in the context of separate embodiments may also be provided in combination in a single embodiment. Conversely, various features which are, for brevity, described in the context of a single embodiment, may also be provided separately or in any suitable sub-combination.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims. Furthermore, the word "may" is used in a permissive sense (i.e., meaning having the potential to), rather than the mandatory sense (i.e., meaning must). Similarly, the words "include," "including," and "includes" mean including, but not limited to.

## Claims

1. A method of operating a battery management system (100), the battery management system comprising a communication chain comprising a battery management unit (110), BMU, and a plurality of battery cell controllers (120, 130, 140), BCC,
**characterized in that** the method comprises:
a most-remote of the BCCs transmitting a message towards the BMU and starting a local-clock counter (142);
each of a remainder of the BCCs receiving the message, and forwarding the message towards the BMU and starting a respective local-clock counter (122, 132);
the BMU receiving the message and starting a BMU-clock counter (112);
the BMU transmitting a further message towards the most-remote of the BCCs, and stopping the BMU-clock counter to determine a BMU-interval-count;
each of the remainder of the BCCs receiving the further message, forwarding the further message towards the most-remote of the BCCs, and stopping the respective local-clock counter to determine a respective local-interval-count;
the most-remote of the BCCs receiving the further message, and stopping the most-remote local-clock counter to determine its local-interval-count;
the BMU transmitting the BMU-interval-count to each of the plurality of the BCCs; and
each of the plurality of BCCs determining a respective communication delay from its respective local-interval-count and the BMU-interval-count.

2. The method according to claim 1, wherein
the most-remote of the BCCs transmitting a message towards the BMU is in response to the BMU transmitting a preliminary message.

3. The method according to claim 1 or 2, wherein the BMU-clock counter and the respective local-clock counter each operate at a same speed.

4. The method according to claim 3, wherein the respective communication delay for each of the plurality of BCCs is half a difference between its respective local-interval-count and the BMU-interval-count.

5. The method according to any preceding claim, wherein starting the respective local-clock counters occurs at the commencement of the respective forwarding of the message, and stopping the respective local-clock counter occurs at the commencement of the respective forwarding of the further message.

6. The method according to any of claims 1 to 4, wherein starting the respective local-clock counters occurs at the end of the respective forwarding of the message, and stopping the respective local-clock counter occurs at the end of the respective forwarding of the further message.

7. The method according to any preceding claim, wherein starting the respective local-clock counter is triggered by a reference associated with the message, wherein the reference is dependent on a communication protocol used.

8. The method according to any preceding claim,
further comprising synchronising an action of the plurality of BCCs.

9. The method according to claim 8, wherein synchronising an action of the plurality of BCCs, comprises each of the BCCs receiving a command, and implementing the command for after a delay equal to a default delay less its respective communication delay.

10. The method according to claim 9, wherein the default delay is a maximum of the respective communication delays and the communication delay of the most-remote BCC.

11. The method according to any preceding claim, wherein the battery management system comprises a further communication chain comprising the BMU and a further plurality of BCCs.

12. The method of claim 11, further comprising:
a most-remote of the further plurality of BCCs transmitting a message towards the BMU and starting a further local-clock counter;
each of a remainder of the BCCs receiving the message, and forwarding the message towards the BMU and starting a respective local-clock counter;
the BMU receiving the message and starting the BMU-clock counter;
the BMU transmitting a further message towards the most-remote of the BCCs, and stopping the BMU-clock counter to determine a further BMU-interval-count;
each of the remainder of the further plurality of BCCs receiving the further message, forwarding the further message towards the most-remote of the further plurality of BCCs, and stopping the respective local-clock counter to determine a respective local-interval-count;
the further most-remote of the BCCs receiving the further message, and stopping the most-remote local-clock counter to determine its local-interval-count;
the BMU transmitting the further-BMU-interval-count to each of the further plurality of the BCCs; and each of the further plurality of BCCs determining a respective communication delay as half a difference between its respective local-interval-count and the BM U-interval-count.

13. A battery management system (100), BMS, comprising:
a battery management unit (110), BMU;
and a plurality of battery cell controllers (120, 130, 140), BCC, in a communication chain configuration with the BMU, and comprising a most-remote BCC;
**characterized in that** the most-remote BCC is configured:
to transmit a message towards the BMU and start a most-remote-clock counter (142);
and to receive a second message, stop the most-remote-clock counter to determine its local-interval-measurement;
wherein each of a remainder of the BCCs is configured:
to receive the message, forward the message towards the BMU and start a respective local-clock counter (122, 132);
and to receive the second message, forward the second message towards the most-remote of the BCCs, and stop the respective local-clock counter to determine a respective local-interval-measurement;
wherein the BMU is configured:
to receive the message, and start a BMU-clock counter (112);
to transmit a further message towards the most-remote of the BCCs, and stop the BMU-clock counter to determine a BMU-interval-measurement;
and to transmit the BMU-interval-measurement to each of the plurality of BCCs;
and wherein each of the plurality of BCCs is further configured to determine a respective communication delay as half a difference between its respective local-interval-measurement and the BMU-interval-measurement.

14. The BMS according to claim 13, further comprising:
a further plurality of BCCs, in a communication chain configuration with the BMU, and comprising a further most-remote BCC;
wherein the further most-remote BCC is configured:
to transmit a message towards the BMU and start a further-most-remote-clock counter;
and to receive a second message, stop the further-most-remote-clock counter to determine its local-interval-measurement;
wherein each of a remainder of the further plurality of BCCs is configured:
to receive the message, forward the message towards the BMU and start a respective local-clock counter;
and to receive the second message, forward the second message towards the further most-remote of the BCCs, and stop the respective local-clock counter to determine a respective local-interval-measurement;
wherein the BMU is configured:
to receive the message, and start a BMU-clock counter;
to transmit a further message towards the further most-remote of the BCCs, and stop the BMU-clock counter to determine a BMU-interval-measurement;
and to transmit the BMU-interval-measurement to each of the plurality of BCCs;
and wherein each of the further plurality of BCCs is further configured to determine a respective communication delay as half a difference between its respective local-interval-measurement and the BMU-interval-measurement.

15. The BMS according to claim 13 or 14, wherein the BMU-clock counter and the respective local-clock counter are each configured to operate at a same speed, and the respective communication delay for each of the plurality of BCCs is half a difference between its respective local-interval-count and the BMU-interval-count.

## Patentansprüche

1. Verfahren zum Betreiben eines Batterieverwaltungssystems (100), wobei das Batterieverwaltungssystem eine Kommunikationskette umfasst, die eine Batterieverwaltungseinheit (110), BMU, und eine Vielzahl von Batteriezellensteuerungen (120, 130, 140), BCCs, umfasst, **dadurch gekennzeichnet, dass** das Verfahren Folgendes umfasst:
eine am weitesten entfernte der BCCs, die eine Nachricht in Richtung der BMU überträgt und einen lokalen Taktzähler (142) startet;
wobei jede eines Rests der BCCs die Nachricht empfängt und die Nachricht in Richtung der BMU weiterleitet und einen jeweiligen lokalen Taktzähler (122, 132) startet;
wobei die BMU die Nachricht empfängt und einen BMU-Taktzähler (112) startet;
wobei die BMU eine weitere Nachricht in Richtung der am weitesten entfernten der BCCs überträgt und den BMU-Taktzähler stoppt, um eine BMU-Intervallzählung zu bestimmen;
wobei jede des Rests der BCCs die weitere Nachricht empfängt, die weitere Nachricht in Richtung der am weitesten entfernten der BCCs weiterleitet und den jeweiligen lokalen Taktzähler stoppt, um eine jeweilige lokale Intervallzählung zu bestimmen;
die am weitesten entfernte der BCCs, die die weitere Nachricht empfängt, und den am weitesten entfernten lokalen Taktzähler stoppt, um seine lokale Intervallzählung zu bestimmen;
wobei die BMU die BMU-Intervallzählung an jede der Vielzahl von BCCs überträgt; und
wobei jede der Vielzahl von BCCs eine jeweilige Kommunikationsverzögerung aus seiner jeweiligen lokalen Intervallzählung und der BMU-Intervallzählung bestimmt.

2. Verfahren nach Anspruch 1, wobei
die am weitesten entfernte der BCCs, die eine Nachricht in Richtung der BMU senden, darauf reagiert, dass die BMU eine vorläufige Nachricht sendet.

3. Verfahren nach Anspruch 1 oder 2, wobei der BMU-Taktzähler und der jeweilige lokale Taktzähler jeweils mit einer gleichen Geschwindigkeit arbeiten.

4. Verfahren nach Anspruch 3, wobei die jeweilige Kommunikationsverzögerung für jede der Vielzahl von BCCs eine halbe Differenz zwischen seiner jeweiligen lokalen Intervallzählung und der BMU-Intervallzählung ist.

5. Verfahren nach einem der vorhergehenden Ansprüche, wobei das Starten der jeweiligen lokalen Taktzähler zu Beginn der jeweiligen Weiterleitung der Nachricht erfolgt und das Stoppen des jeweiligen lokalen Taktzählers zu Beginn der jeweiligen Weiterleitung der weiteren Nachricht erfolgt.

6. Verfahren nach einem der Ansprüche 1 bis 4, wobei das Starten der jeweiligen lokalen Taktzähler am Ende der jeweiligen Weiterleitung der Nachricht erfolgt und das Stoppen des jeweiligen lokalen Taktzählers am Ende der jeweiligen Weiterleitung der weiteren Nachricht erfolgt.

7. Verfahren nach einem der vorhergehenden Ansprüche, wobei das Starten des jeweiligen lokalen Taktzählers durch eine Referenz ausgelöst wird, die mit der Nachricht assoziiert ist, wobei die Referenz von einem verwendeten Kommunikationsprotokoll abhängt.

8. Verfahren nach einem der vorhergehenden Ansprüche, das ferner das Synchronisieren einer Handlung der Vielzahl von BCCs umfasst.

9. Verfahren nach Anspruch 8, wobei das Synchronisieren einer Handlung der Vielzahl von BCCs umfasst, dass jede der BCCs einen Befehl empfängt und den Befehl nach einer Verzögerung gleich einer Standardverzögerung abzüglich seiner jeweiligen Kommunikationsverzögerung implementiert.

10. Verfahren nach Anspruch 9, wobei die Standardverzögerung ein Maximum der jeweiligen Kommunikationsverzögerungen und der Kommunikationsverzögerung der am weitesten entfernten BCC ist.

11. Verfahren nach einem der vorhergehenden Ansprüche, wobei das Batterieverwaltungssystem eine weitere Kommunikationskette umfasst, die die BMU und eine weitere Vielzahl von BCCs umfasst.

12. Verfahren nach Anspruch 11, das ferner Folgendes umfasst:
eine am weitesten entfernter der weiteren Vielzahl von BCCs, die eine Nachricht in Richtung der BMU sendet und einen weiteren lokalen Taktzähler startet;
wobei jede eines Rests der BCCs die Nachricht empfängt und die Nachricht in Richtung der BMU weiterleitet und einen jeweiligen lokalen Taktzähler startet;
wobei die BMU die Nachricht empfängt und den BMU-Taktzähler startet;
wobei die BMU eine weitere Nachricht in Richtung der am weitesten entfernten der BCCs überträgt und den BMU-Taktzähler stoppt, um eine weitere BMU-Intervallzählung zu bestimmen;
wobei jede des Rests der weiteren Vielzahl von BCCs die weitere Nachricht empfängt, die weitere Nachricht in Richtung der am weitesten entfernten der weiteren Vielzahl von BCCs weiterleitet und den jeweiligen lokalen Taktzähler stoppt, um eine jeweilige lokale Intervallzählung zu bestimmen;
die weitere am weitesten entfernte der BCCs, die die weitere Nachricht empfängt, und den am weitesten entfernten lokalen Taktzähler stoppt, um seine lokale Intervallzählung zu bestimmen;
wobei die BMU die weitere-BMU-Intervallzählung an jede der weiteren Vielzahl der BCCs überträgt; und
jede der weiteren Vielzahl von BCCs eine jeweilige Kommunikationsverzögerung als eine halbe Differenz zwischen seiner jeweiligen lokalen Intervallzählung und der BMU-Intervallzählung bestimmt.

13. Batteriemanagementsystem (100), BMS, das Folgendes umfasst:
eine Batterieverwaltungseinheit (110), BMU;
und eine Vielzahl von Batteriezellensteuerungen (120, 130, 140), BCCs, in einer Kommunikationskettenkonfiguration mit der BMU, und eine am weitesten entfernte BCC umfasst;
**dadurch gekennzeichnet, dass** die am weitesten entfernte BCC dazu konfiguriert ist:
eine Nachricht in Richtung der BMU zu übertragen und einen Zählerstand für den am weitesten entfernten Taktzähler (142) zu starten;
und eine zweite Nachricht zu empfangen, den am weitesten entfernten Taktzähler zu stoppen, um seine lokale Intervallmessung zu bestimmen;
wobei jede eines Rests der BCCs dazu konfiguriert ist:
die Nachricht zu empfangen, die Nachricht in Richtung der BMU weiterzuleiten und einen jeweiligen lokalen Taktzähler (122, 132) zu starten;
und die zweite Nachricht zu empfangen, die zweite Nachricht in Richtung der am weitesten entfernten der BCCs weiterzuleiten und den jeweiligen lokalen Taktzähler zu stoppen, um eine jeweilige lokale Intervallmessung zu bestimmen;
wobei die BMU dazu konfiguriert ist:
die Nachricht zu empfangen und einen BMU-Taktzähler (112) zu starten;
eine weitere Nachricht in Richtung der am weitesten entfernten der BCCs zu übertragen und den BMU-Taktzähler zu stoppen, um eine BMU-Intervallmessung zu bestimmen;
und die BMU-Intervallmessung an jede der Vielzahl von BCCs zu übertragen;
und wobei jede der Vielzahl von BCCs ferner dazu ausgelegt ist, eine jeweilige Kommunikationsverzögerung als eine halbe Differenz zwischen seiner jeweiligen lokalen Intervallmessung und der BMU-Intervallmessung zu bestimmen.

14. BMS nach Anspruch 13, das ferner Folgendes umfasst:
eine weitere Vielzahl von BCCs, in einer Kommunikationskettenkonfiguration mit der BMU, und umfassend eine weitere am weitesten entfernte BCC;
wobei die weitere am weitesten entfernte BCC dazu konfiguriert ist:
eine Nachricht in Richtung der BMU zu übertragen und einen weiteren am weitesten entfernten Taktzähler zu starten;
und eine zweite Nachricht zu empfangen, den weiteren am weitesten entfernten Taktzähler zu empfangen, um seine lokale Intervallmessung zu bestimmen;
wobei jede eines Rests der weiteren Vielzahl von BCCs dazu konfiguriert ist:
die Nachricht zu empfangen, die Nachricht in Richtung der BMU weiterzuleiten und einen jeweiligen lokalen Taktzähler zu starten;
und die zweite Nachricht zu empfangen, die zweite Nachricht in Richtung der weiteren am weitesten entfernten der BCCs weiterzuleiten, und den jeweiligen lokalen Taktzählers zu stoppen, um eine jeweilige lokale Intervallmessung zu bestimmen;
wobei die BMU dazu konfiguriert ist:
die Nachricht zu empfangen und einen BMU-Taktzähler zu starten;
eine weitere Nachricht in Richtung der weiteren am weitesten entfernten der BCCs zu übertragen und den BMU-Taktzähler zu stoppen, um eine BMU-Intervallmessung zu bestimmen;
und die BMU-Intervallmessung an jede der Vielzahl von BCCs zu übertragen;
und wobei jede der weiteren eine Vielzahl von BCCs ferner dazu ausgelegt ist, eine jeweilige Kommunikationsverzögerung als eine halbe Differenz zwischen seiner jeweiligen lokalen Intervallmessung und der BMU-Intervallmessung zu bestimmen.

15. BMS nach Anspruch 13 oder 14, wobei der BMU-Taktzähler und der jeweilige lokale Taktzähler jeweils dazu konfiguriert sind, mit derselben Geschwindigkeit zu arbeiten, und die jeweilige Kommunikationsverzögerung für jede der Vielzahl von BCCs eine halbe Differenz zwischen seiner jeweiligen lokalen Intervallzählung und der BMU-Intervallzählung ist.

## Revendications

1. Procédé de fonctionnement d'un système de gestion de batterie (100), le système de gestion de batterie comprenant une chaîne de communication comprenant une unité de gestion de batterie, BMU, (110), et une pluralité de contrôleurs de cellule de batterie, BCC, (120, 130, 140), le procédé étant **caractérisé en ce qu'**il comprend :
par le BCC le plus éloigné parmi les BCC, la transmission d'un message vers la BMU et le démarrage d'un compteur d'horloge locale (142) ;
par chacun des BCC restants, la réception du message, et le transfert du message vers la BMU et le démarrage d'un compteur d'horloge locale (122, 132) respectif ;
par la BMU , la réception du message et le démarrage d'un compteur d'horloge BMU (112) ;
par la BMU, la transmission d'un message supplémentaire vers le BCC le plus éloigné parmi les BCC, et l'arrêt du compteur d'horloge BMU pour déterminer un comptage d'intervalle BMU ;
par chacun des BCC restants, la réception du message supplémentaire, le transfert du message supplémentaire vers le BCC le plus éloigné parmi les BCC, et l'arrêt du compteur d'horloge locale respectif pour déterminer un comptage d'intervalle local respectif ;
par le BCC le plus éloigné parmi les BCC, la réception du message supplémentaire, et l'arrêt du compteur d'horloge locale du plus éloigné pour déterminer son comptage d'intervalle local ;
par la BMU, la transmission du comptage d'intervalle BMU à chacun de la pluralité de BCC ; et
par chacun de la pluralité de BCC, la détermination d'un délai de communication respectif à partir de son comptage d'intervalle local respectif et du comptage d'intervalle BMU.

2. Procédé selon la revendication 1, dans lequel la transmission, par le BCC le plus éloigné parmi les BCC, d'un message vers la BMU s'effectue en réponse à la transmission, par la BMU, d'un message préliminaire.

3. Procédé selon la revendication 1 ou 2, dans lequel le compteur d'horloge BMU et le compteur d'horloge locale respectif fonctionnent chacun à une même vitesse.

4. Procédé selon la revendication 3, dans lequel le délai de communication respectif pour chacun de la pluralité de BCC est égal à la moitié de la différence entre son comptage d'intervalle local respectif et le comptage d'intervalle BMU.

5. Procédé selon l'une quelconque des revendications précédentes, dans lequel le démarrage des compteurs d'horloge locale respectifs se produit au début du transfert respectif du message, et l'arrêt du compteur d'horloge locale respectif se produit au début du transfert respectif du message supplémentaire.

6. Procédé selon l'une quelconque des revendications 1 à 4, dans lequel le démarrage des compteurs d'horloge locale respectifs se produit à la fin du transfert respectif du message, et l'arrêt du compteur d'horloge locale respectif se produit à la fin du transfert respectif du message supplémentaire.

7. Procédé selon l'une quelconque des revendications précédentes, dans lequel le démarrage du compteur d'horloge locale respectif est déclenché par une référence associée au message, la référence dépendant d'un protocole de communication utilisé.

8. Procédé selon l'une quelconque des revendications précédentes,
comprenant en outre la synchronisation d'une action de la pluralité de BCC.

9. Procédé selon la revendication 8, dans lequel la synchronisation d'une action de la pluralité de BCC comprend, par chacun des BCC, la réception d'une commande, et la mise en œuvre de la commande après un délai égal à un délai par défaut minoré de son délai de communication respectif.

10. Procédé selon la revendication 9, dans lequel le délai par défaut est un maximum des délais de communication respectifs et du délai de communication du BCC le plus éloigné.

11. Procédé selon l'une quelconque des revendications précédentes, dans lequel le système de gestion de batterie comprend une chaîne de communication supplémentaire comprenant la BMU et une pluralité supplémentaire de BCC.

12. Procédé selon la revendication 11, comprenant en outre :
par le BCC le plus éloigné parmi la pluralité supplémentaire de BCC, la transmission d'un message vers la BMU et le démarrage d'un compteur d'horloge locale supplémentaire ;
par chacun des BCC restants, la réception du message, et le transfert du message vers la BMU et le démarrage d'un compteur d'horloge locale respectif ;
par la BMU, la réception du message et le démarrage d'un compteur d'horloge BMU ;
par la BMU, la transmission d'un message supplémentaire vers le BCC le plus éloigné parmi les BCC, et l'arrêt du compteur d'horloge BMU pour déterminer un comptage d'intervalle BMU supplémentaire ;
par chacun des BCC restants de la pluralité supplémentaire, la réception du message supplémentaire, le transfert du message supplémentaire vers le BCC le plus éloigné parmi la pluralité supplémentaire de BCC, et l'arrêt du compteur d'horloge locale respectif pour déterminer un comptage d'intervalle local respectif ;
par le BCC le plus éloigné supplémentaire parmi les BCC, la réception du message supplémentaire, et l'arrêt du compteur d'horloge locale du plus éloigné pour déterminer son comptage d'intervalle local ;
par la BMU, la transmission du comptage d'intervalle BMU supplémentaire à chacun de la pluralité supplémentaire de BCC ; et
par chacun de la pluralité supplémentaire de BCC, la détermination d'un délai de communication respectif comme étant égal à la moitié de la différence entre son comptage d'intervalle local respectif et le comptage d'intervalle BMU.

13. Système de gestion de batterie, BMS, (100) comprenant :
une unité de gestion de la batterie, BMU, (110) ;
et une pluralité de contrôleurs de cellule de batterie, BCC, (120, 130, 140) dans une configuration en chaîne de communication avec la BMU, et comprenant un BCC le plus éloigné ;
**caractérisé en ce que** le BCC le plus éloigné est configuré pour :
transmettre un message vers la BMU et démarrer un compteur d'horloge du plus éloigné (142) ;
et recevoir un deuxième message, arrêter le compteur d'horloge du plus éloigné pour déterminer sa mesure d'intervalle local ;
chacun des BCC restants étant configuré pour :
recevoir le message, transférer le message vers la BMU et démarrer un compteur d'horloge locale (122, 132) respectif ;
et recevoir le deuxième message, transférer le deuxième message vers le BCC le plus éloigné parmi les BCC, et arrêter le compteur d'horloge locale respectif pour déterminer une mesure d'intervalle local respective ;
la BMU étant configurée pour :
recevoir le message, et démarrer un compteur d'horloge BMU (112) ;
transmettre un message supplémentaire vers le BCC le plus éloigné parmi les BCC, et arrêter le compteur d'horloge BMU pour déterminer une mesure d'intervalle BMU ;
et transmettre la mesure d'intervalle BMU à chacun de la pluralité de BCC ;
et chacun de la pluralité de BCC étant configuré en outre pour déterminer un délai de communication respectif comme étant égal à la moitié de la différence entre sa mesure d'intervalle local respective et la mesure d'intervalle BMU.

14. BMS selon la revendication 13, comprenant en outre :
une pluralité supplémentaire de BCC, dans une configuration en chaîne de communication avec la BMU, et comprenant un BCC le plus éloigné supplémentaire ;
le BCC le plus éloigné supplémentaire étant configuré pour :
transmettre un message vers la BMU et démarrer un compteur d'horloge du plus éloigné supplémentaire ;
et recevoir un deuxième message, arrêter le compteur d'horloge du plus éloigné supplémentaire pour déterminer sa mesure d'intervalle local ;
chacun des BCC restants de la pluralité supplémentaire étant configuré pour :
recevoir le message, transférer le message vers la BMU et démarrer un compteur d'horloge locale respectif ;
et recevoir le deuxième message, transférer le deuxième message vers le BCC le plus éloigné supplémentaire parmi les BCC, et arrêter le compteur d'horloge locale respectif pour déterminer une mesure d'intervalle local respective ;
la BMU étant configurée pour :
recevoir le message, et démarrer un compteur d'horloge BMU ;
transmettre un message supplémentaire vers le BCC le plus éloigné supplémentaire parmi les BCC, et arrêter le compteur d'horloge BMU pour déterminer une mesure d'intervalle BMU ;
et transmettre la mesure d'intervalle BMU à chacun de la pluralité de BCC ;
et chacun de la pluralité supplémentaire de BCC étant configuré en outre pour déterminer un délai de communication respectif comme étant égal à la moitié de la différence entre sa mesure d'intervalle local respective et la mesure d'intervalle BMU.

15. BMS selon la revendication 13 ou 14, dans lequel le compteur d'horloge BMU et le compteur d'horloge locale respectif sont chacun configurés pour fonctionner à une même vitesse, et le délai de communication respectif pour chacun de la pluralité de BCC étant égal à la moitié de la différence entre son comptage d'intervalle local respectif et le comptage d'intervalle BMU.
